Europäisches Patentamt

European Patent Office

Office européen des brevets

(11) Veröffentlichungsnummer: **0 254 266**
**B1**

(12) **EUROPÄISCHE PATENTSCHRIFT**

(45) Veröffentlichungstag der Patentschrift:
25.10.89

(51) Int. Cl.⁴: **C03B 37/012**, C03B 19/06,
C03B 19/09, B65G 53/08

(21) Anmeldenummer: 87110533.4

(22) Anmeldetag: 21.07.87

(54) Verfahren zum Herstellen von Lichtwellenleitern, ausgehend von pulverförmigem Glasausgangsmaterial.

(30) Priorität: 23.07.86 DE 3624918

(43) Veröffentlichungstag der Anmeldung:
27.01.88 Patentblatt 88/4

(45) Bekanntmachung des Hinweises auf die Patenterteilung:
25.10.89 Patentblatt 89/43

(84) Benannte Vertragsstaaten:
AT BE CH DE ES FR GB GR IT LI LU NL SE

(56) Entgegenhaltungen:
EP-A- 0 140 570
EP-A- 0 153 619
DE-A- 3 217 965

(73) Patentinhaber: Standard Elektrik Lorenz
Aktiengesellschaft, Lorenzstrasse 10,
D-7000 Stuttgart 40(DE)

(84) Benannte Vertragsstaaten: DE

(73) Patentinhaber: ALCATEL N.V.,
Strawinskylaan 537 (World Trade Center), NL-1077 XX
Amsterdam(NL)

(84) Benannte Vertragsstaaten: BE CH ES FR GB GR IT LI LU
NL SE AT

(72) Erfinder: Gutu-Nelle, Anca, Münchinger Strasse 11 A,
D-7000 Stuttgart 40(DE)
Erfinder: Baumgärtner, Armin, Dr., Heutingsheimer
Strasse 26, D-7140 Ludwigsburg(DE)

(74) Vertreter: Kugler, Hermann, Dipl.-Phys. et al, Standard
Elektrik Lorenz AG Patent- und Lizenzwesen
Postfach 30 09 29, D-7000 Stuttgart 30(DE)

ACTORUM AG

## Beschreibung

Die Erfindung betrifft ein Verfahren nach dem Oberbegriff des Patentanspruchs 1. Ein derartiges Verfahren ist bekannt aus der EP-A2-0 153 619. Bei diesem Verfahren wird die Fördergeschwindigkeit, exakter ausgedrückt, die pro Zeiteinheit geförderte Pulvermenge, durch die Drehzahl der Förderschnecke oder der Förderschnecken bestimmt.

Es ist Aufgabe der Erfindung, ein Verfahren der genannten Art anzugeben, bei dem die pro Zeiteinheit geförderte Pulvermenge zusätzlich noch durch andere Mittel bestimmbar ist.

Die Aufgabe wird wie im Patentanspruch 1 angegeben gelöst. Weiterbildungen ergeben sich aus den Unteransprüchen.

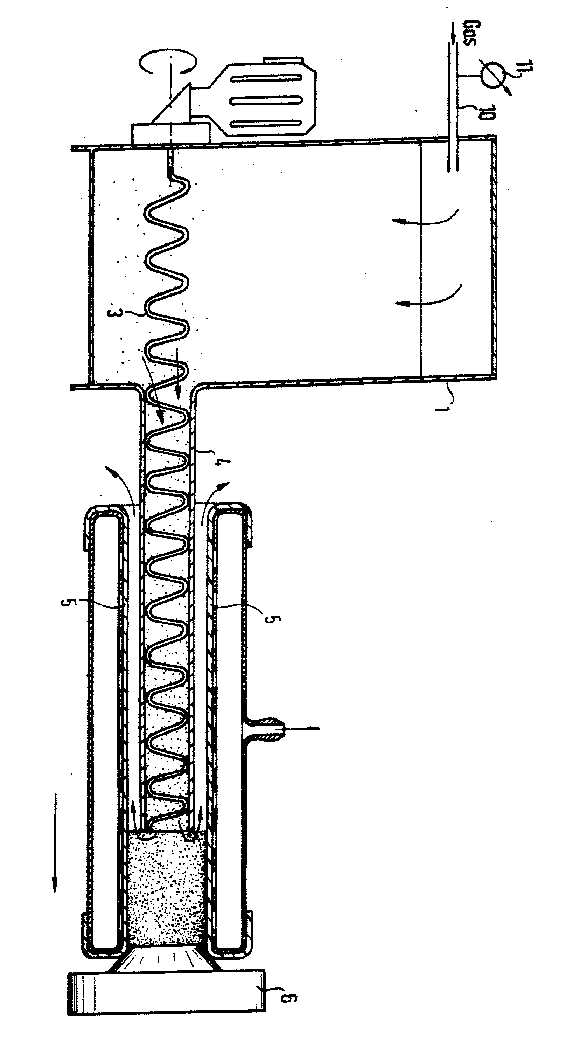

Die Erfindung wird nun anhand der Zeichnung näher erläutert. Die einzige Figur der Zeichnung zeigt eine Vorrichtung zum Einfüllen des pulverförmigen Glasausgangsmaterials in eine Form gemäß dem erfindungsgemäßen Verfahren.

Diese Vorrichtung ist bis auf einige leichte Änderungen identisch mit der in der eingangs genannten Druckschrift angegebenen Vorrichtung. Die Änderungen sind:

1. Der Vorratsbehälter 1, in dem sich das pulverförmige Glasausgangsmaterial befindet und der gegen die äußere Atmosphäre abgedichtet ist, weist in seinem nicht von dem pulverförmigen Glasausgangsmaterial ausgefüllten oberen Bereich ein Gas-Einlaßrohr 10 auf, das mit einem Manometer 11 zur Messung und Anzeige des in dem oberen Bereich herrschenden Gasdrucks versehen ist.

2. Das Förderrohr 4 ragt frei in die Form 5 hinein, d. h. der bei der bekannten Vorrichtung am vorderen Ende des Förderrohrs 4 vorhandene Dichtring 8, der den zwischen dem Förderrohr 4 und der Form 5 bestehenden Zwischenraum gegen die Atmosphäre abdichtet, ist hier weggelassen. (Der Zwischenraum zwischen dem Förderrohr 4 und der Form 5 ist in der Zeichnung übertrieben groß dargestellt).

Während des Einfüllens läßt man nun ein Gas, dessen Eigenschaften später erwähnt werden, in das Gas-Einlaßrohr 10 unter einem konstanten, regelbaren Gasdruck einströmen. Dieses Gas strömt, wie durch die Pfeile angedeutet, durch das pulverförmige Glasausgangsmaterial, das sich im Vorratsbehälter 1 befindet, hindurch, von dort in das Förderrohr 4 hinein, tritt am vorderen Ende des Förderrohrs 4 aus und verläßt die Fördervorrichtung, wie durch die Pfeile angedeutet, durch den zwischen dem Förderrohr 4 und der Form 5 vorhandenen Zwischenraum.

Das die Fördervorrichtung wie beschrieben durchströmende Gas erhöht die pro Zeiteinheit geförderte Pulvermenge über den Wert, der durch die Konstruktion und die Drehzahl der Förderschnecke 3 bestimmt ist. Die pro Zeiteinheit geförderte Pulvermenge, damit auch die pro Zeiteinheit eingefüllte Pulvermenge, läßt sich also dadurch einstellen, daß man die pro Zeiteinheit durch die Fördervorrichtung hindurchströmende Gasmenge so einstellt, daß sich die gewünschte Förderung ergibt.

Die Einstellung der pro Zeiteinheit einströmenden Gasmenge geschieht über den im Vorratsbehälter herrschenden Gasdruck, da dieser die pro Zeiteinheit einströmende Gasmenge bestimmt. Der Gasdruck wird durch eine manuelle Einstellung oder durch eine nicht gezeigte automatisch arbeitende Druckregelvorrichtung auf einem geeigneten konstanten Wert gehalten. Erfahrungsgemäß sind Drücke im Bereich von 50 bis 200 mbar oberhalb des atmosphärischen Druckes geeignet.

Das Durchströmen des Gases durch die Fördervorrichtung hat folgende Vorteile:

Wenn man die mittlere Dichte des in die Form 5 eingefüllten Pulvermaterials erhöhen will, so muß man die auf den Deckel 6 wirkende Gegenkraft erhöhen. Dies vermindert aber die pro Zeiteinheit eingefüllte Pulvermenge. Durch Erhöhen des Gasdrucks kann man die pro Zeiteinheit eingefüllte Pulvermenge wieder erhöhen.

Wenn man als durchströmendes Gas ein trockenes Gas verwendet, so kann man im pulverförmigen Glasausgangsmaterial noch vorhandene Feuchtigkeitsreste entfernen, da diese von dem trockenen hindurchströmenden Gas aufgenommen werden und mit diesem Gas die Fördervorrichtung verlassen.

Vorzugsweise wird ein Gas verwendet, das nicht nur trocken, sondern auch möglichst rein ist, damit das pulverförmige Glasausgangsmaterial nicht durch Verunreinigungen, insbesondere in Form von Metallen und Übergangsmetallen, in seiner Qualität verschlechtert wird.

Mit trockenem und reinem Helium wurden bisher gute Erfahrungen gemacht, und die pro Zeiteinheit eingefüllte Menge wurde als Wirkung der Gasströmung um den Faktor 4 erhöht.

Obwohl der Zwischenraum zwischen der Form 5 und dem Einfüllrohr 4 nicht abgedichtet ist, ist das eingefüllte Pulvermaterial gegenüber Einflüssen aus der Atmosphäre geschützt, da das aus dem Zwischenraum zwischen dem Förderrohr 4 und der Form 5 austretende Gas ein Eindringen von Luft oder irgendwelchen in der Luft enthaltenden Verunreinigungen verhindert.

Sollte zwischen dem Förderrohr 4 und der Innenwand der Form 5 ein Gleitring oder ähnliches notwendig werden, um eine definierte Führung des Einfüllrohrs innerhalb der Form 5 zu gewährleisten, so wäre hierfür ein Ring aus irgendeinem Material geeignet, das das Gas hindurchströmen läßt.

Es ist noch erwähnenswert, das vorstehend beschriebene Verfahren der Gasströmung beim Einfüllen von Pulvern in eine Form auch bei anderen Verfahren zum Einfüllen von Pulvern in Formen verwendbar ist, insbesondere auch bei dem in der im Sinne von Artikel I 54 (3) EPÜ älteren Europäischen Patentanmeldung EP-A 0 202 548 vorgeschlagenen Verfahren, bei dem die Form nicht wie in der eingangs angegebenen Druckschrift ein vorgedehnter Schlauch, sondern ein Kieselglasrohr ist. Die Anwendung bei diesem letzteren Verfahren geschieht in genau entsprechender Weise und bedarf daher keiner eigenen Erläuterungen. Zu näheren Erläuterungen der in der vorstehend beschriebenen Zeichnung gezeigten Einzelheiten der Fördervorrichtung wird auf die eingangs genannte Druckschrift hingewiesen.

**Patentansprüche**

1. Verfahren zum Herstellen von Lichtwellenleitern, bei dem zum Herstellen einer Vorform pulverförmiges Glasausgangsmaterial mittels Förderschnecken (3) unter Vorverdichtung in eine Form (5) eingefüllt wird,
**dadurch gekennzeichnet,** daß das in der Fördervorrichtung geförderte pulverförmige Glasausgangsmaterial von einem Gas durchströmt wird.

2. Verfahren nach Anspruch 1, dadurch gekennzeichnet, daß als Gas ein trockenes, reines Gas verwendet wird.

3. Verfahren nach Anspruch 2, dadurch gekennzeichnet, daß als Gas Helium verwendet wird.

4. Verfahren nach einem der Ansprüche 1 bis 3, dadurch gekennzeichnet, daß das Gas auf einen konstanten Druck oberhalb des atmospärischen Druckes gehalten wird.

5. Verfahren nach Anspruch 4, dadurch gekennzeichnet, daß der konstante Druck aus einem Bereich von 500 bis 10 mbar oberhalb des armospärischen Druckes ausgewählt wird.

**Claims**

1. Method of making optical waveguides wherein, to fabricate a preform, glass forming pulverulent material is filled into a mold (5) under pre-compaction by means of screw conveyors (3), characterized in that a gas is passed through the glass forming pulverulent material conveyed with the screw conveyors.

2. A method as claimed in claim 1, characterized in that a dry, pure gas is used.

3. A method as claimed in claim 2, characterized in that the gas is helium.

4. A method as claimed in any one of claims 1 to 3, characterized in that the gas is kept at a constant pressure above the atmospheric pressure.

5. A method as claimed in claim 4, characterized in that the constant pressure is selected from a range from 500 to 10 mbars above the atmospheric pressure.

**Revendicatios**

1. Procédé de fabfication de guides d'ondes optiques dans lequel, pour la fabrication d'une préforme, un matériau de départ de verre réduit en poudre vient remplir sous pression un moule (5) par le moyen d'un transporteur à vis sans fin (3), caractérisé en ce que ledit matériau de départ de verre réduit en poudre transporté est traversé par un gaz, dans la direction de transport.

2. Procédé conforme à la revendication 1, caractérisé en ce que ledit gaz est un gaz purifié et desséché.

3. 3. Procédé conforme à la revendication 2, caractérisé en ce que ledit gaz est de l'hélium.

4. Procédé conforme à l'une quelconque des revendications 1 à 3, caractérisé en ce que ledit gaz est maintenu à une pression constante, supérieure à la pression atmosphérique.

5. Procédé conforme à la revendication 4, caractérisé en ce que ladite pression constante est sélectionnée dans une plage de 500 à 10 mbar au-dessus de la pression atmosphérique.